# EUROPEAN PATENT SPECIFICATION

(11) **EP 3 835 142 B1**
(45) Date of publication and mention of the grant of the patent: **10.08.2022**
(21) Application number: 20212553.0
(22) Date of filing: 08.12.2020
(51) Int. Cl.: B60R 25/09

(54) **A WHEEL CLAMP FOR A VEHICLE**
RADKLAMMER FÜR EIN FAHRZEUG
DISPOSITIF DE BLOCAGE DE ROUE DE VÉHICULE

(30) Priority: 09.12.2019 GB 201918026
(43) Date of publication of application: 16.06.2021
(73) Proprietor: Purple Line Limited, Ipswich, Suffolk IP9 2BB (GB)
(72) Inventor: HARRISON, Jonathan, IPSWICH, IP9 2BB (GB); WHITMORE, Toby, IPSWICH, IP9 2BB (GB)
(74) Representative: Dummett Copp LLP

(56) References cited:
- EP-A1- 3 628 548
- DE-U1-202005 002 720
- GB-A- 2 483 109
- GB-A- 2 583 846
- TW-A- 202 014 323
- US-A- 4 819 462

## Description

### FIELD OF THE INVENTION

The present invention relates to a wheel clamp for a wheeled vehicle and a method of immobilising a wheeled vehicle.

### BACKGROUND TO THE INVENTION

Wheel clamps are well known devices to immobilise wheeled vehicles. Wheel clamps may be used by third parties who want to immobilise vehicles which are illegally parked and located in unauthorised locations. In addition, vehicle owners may also fit a wheel clamp to their own vehicle in order to deter and prevent the theft of the vehicle.

Generally, wheel clamps include means for securing the clamp to a wheel, and also means to prevent rotation of the wheel once the clamp is secured. Rotation of the wheel may be prevented by a part of the wheel clamp which contacts the ground, or which contacts a part of the vehicle.

Conventional wheel clamps may include parts which span beyond the diameter of the wheel. Such clamps may be large, heavy and cumbersome to fit. In addition, some wheel clamps may comprise numerous detachable components which may easily be lost or misplaced. Accordingly, the physical size and number of components may deter or prevent users from always using the wheel clamps or transporting the wheel clamps for use.

Some wheel clamps are arranged to be mounted to an outer face of a wheel and include a shaft or arm which extends through an opening in the wheel (such as between spokes of the wheel). The arm is arranged to extend through and beyond the opening in the wheel and to contact a part of the vehicle, such as the chassis, to prevent rotation of the wheel. One such arrangement is described in the applicant's granted UK patent GB 2483109 B.

With some vehicles, certain types of brakes, such as disc brakes or larger drum brakes, may at least partially block openings in a wheel so that an arm or shaft cannot easily be passed through the wheel openings in such a way that it would contact a chassis or other suitable part of the vehicle in order to lock the wheel.

It is against that background that the present invention has been devised.

### SUMMARY OF THE INVENTION

From a first aspect, the present invention provides a wheel clamp for immobilising a vehicle, the vehicle comprising a wheel having a first face, a second face and a periphery forming a ground-contacting surface of the wheel, and the wheel comprising a plurality of mounting apertures for receiving wheel fasteners for attaching the wheel to a rotatable hub of the vehicle and a plurality of openings extending from the first face towards the second face, the openings being disposed between the mounting apertures and the periphery.

The wheel clamp comprises a body arranged to be positioned, in use, adjacent to the first face of the wheel, locking means to releasably secure the wheel clamp to the vehicle, the locking means comprising a first locking member arranged to extend through a mounting aperture of the wheel to attach the wheel to the hub and a second locking member operable to releasably attach the body to the first locking member, a coupling pin extending from the body and arranged to extend into one of the openings of the wheel so as to couple rotationally the wheel clamp to the wheel, and an immobilising arm extending from the body and arranged to extend adjacent to the periphery of the wheel and beyond the second face of the wheel such that, in use, rotation of the wheel is blocked by contact between the immobilising arm and a part of the vehicle.

With this arrangement, upon attempted rotation of the wheel with the wheel clamp in place, the coupling pin comes into contact with a solid part of the wheel at the periphery of the opening, so that the wheel clamp is coupled to turn with the wheel. However, free rotation of the wheel is not possible because the immobilising arm comes into contact with a part of the vehicle, such as a chassis member or other component inboard of the second face of the wheel, which blocks further turning of the wheel clamp and therefore the wheel. In this way, the wheel clamp is effective in immobilising the vehicle, whist being simple to install and relatively compact.

Furthermore, it is not necessary for the coupling pin to extend fully through the wheel in order to couple the wheel clamp to the wheel. In this way, the wheel clamp is suitable for use with vehicles in which brake components or other parts are disposed behind the wheel openings. To this end, the immobilising arm may extend further from the body than the coupling pin.

Preferably, the position of the coupling pin relative to the locking means is adjustable. For example, the coupling pin may be slidably mounted with respect to the body such that the position of the coupling pin relative to the locking means can be changed by sliding of the coupling pin. The coupling pin may comprise a shaft and an enlarged head, and the body may comprise an elongate coupling pin slot for receiving the coupling pin shaft. In such a case, the coupling pin slot may be sized such that the coupling pin cannot pass through the coupling pin slot.

Preferably, the position of the immobilising arm relative to the locking means is adjustable. For example, the immobilising arm may be slidably mounted with respect to the body such that the position of the immobilising arm relative to the locking means can be changed by sliding of the immobilising arm.

The immobilising arm may comprise a shaft and an enlarged head, and the body may comprise an elongate immobilising arm slot for receiving the immobilising arm shaft. The immobilising arm slot may be sized such that the immobilising arm head cannot pass through the immobilising arm slot. The immobilising arm slot may connect with a release aperture through which the immobilising arm head can pass to allow removal of the immobilising arm from the body. Preferably, the release aperture is disposed between the immobilising arm slot and the locking means and is positioned such that, when the wheel clamp is secured to the vehicle, movement of the immobilising arm to the release aperture is blocked by the periphery of the wheel.

The body may comprise a base plate from which the coupling pin and the immobilising arm extend, and a cover. The cover may prevent access to the immobilising arm in use. The immobilising arm slot, when provided, is preferably disposed in the base plate. The head of the immobilising arm may be retained in a space between the base plate and the cover.

The coupling pin slot, when provided, may be disposed in the base plate, and the head of the coupling pin may be retained in the space between the base plate and the cover. The cover may prevent access to the coupling pin in use. Alternatively, the coupling pin may comprise a grip that extends through a slot in the cover to allow adjustment of the position of the coupling pin relative to the locking means. The grip may be operable to clamp the coupling pin to the body to fix the position of the coupling pin relative to the locking means.

The body may at least partially conceal at least one further mounting aperture of the wheel when the wheel clamp is secured to the vehicle. In this way, the body may act as a shield to prevent access to the wheel fasteners.

The first locking member preferably comprises a replacement wheel fastener, such as a wheel bolt or wheel nut.

The body may comprise a socket for receiving the second locking member. The socket may comprise an abutment surface for limiting relative movement of the second locking member and the body. The socket may comprise an aperture for receiving a shaft of the second locking member. The socket may comprise a generally tubular housing, which may act as a shroud for protection of the second locking member.

The coupling pin and/or the immobilising pin may extend substantially perpendicularly to the first face of the wheel in use.

The invention also extends, in a second aspect, to a method of immobilising a vehicle, comprising positioning such a wheel clamp against a first face of the wheel, such that a coupling pin of the wheel clamp extends into an opening of the wheel to rotationally couple the wheel clamp to the wheel, and such that an immobilising arm of the wheel clamp extends adjacent to a periphery of the wheel and beyond a second face of the wheel to contact a part of the vehicle upon attempted rotation of the wheel. The method further comprises securing the wheel clamp to a hub of the vehicle to which the wheel is mounted by way of a locking means that extends through a mounting aperture of the wheel.

The method may comprise installing a first locking member of the locking means in place of a wheel fastener in a mounting aperture of the wheel to attach the wheel to the hub. In this case, securing the wheel clamp to the hub may comprise engaging a second locking member with a body of the wheel clamp and the first locking member.

The method may comprise adjusting the position of the coupling pin and/or the immobilising arm before or during positioning of the wheel clamp against the first face of the wheel.

Preferred and/or optional features of each aspect and embodiment of the invention may also be used, alone or in appropriate combination, in the other aspects and embodiments also.

Further features and advantages of the present invention will become apparent from the following description of embodiments of the invention.

### BRIEF DESCRIPTION OF THE DRAWINGS

Embodiments of the present invention will now be described, by way of example only, with reference to the accompanying drawings in which like reference signs are used for like features, and in which:
Figure 1 is an exploded perspective view of a wheel clamp according to an embodiment of the invention;
Figure 2 shows the wheel clamp of Figure 1 attached to a wheel;
Figure 3 is a cross-sectional view of the wheel clamp of Figure 1;
Figure 4 is a perspective view of the wheel clamp of Figure 1 showing a rear side;
Figure 5 is another cross-sectional view of the wheel clamp of Figure 1 on a perpendicular plane to Figure 3;
Figure 6 is a perspective view of the wheel clamp of Figure 1 during installation;
Figure 7 is a perspective view showing a wheel clamp according to another embodiment of the invention;
Figure 8 is a perspective view of the wheel clamp of Figure 7, mounted to a wheel; and
Figure 9 is a cross-sectional view of the wheel clamp of Figure 7.

### DETAILED DESCRIPTION OF THE EMBODIMENTS

The present invention provides a wheel clamp which is arranged to be secured to a vehicle via a mounting aperture of a wheel. The wheel clamp includes a body that forms a shield which extends over part of a first, outer face of the wheel. The wheel clamp comprises a coupling pin which extends at least partially into an opening in the wheel, other than a mounting aperture, so that in use, the wheel clamp is rotatably coupled to the wheel. The wheel clamp further comprises an immobilising arm which extends from the shield alongside a periphery of the wheel towards the vehicle, beyond a second, inner face of the wheel, and is arranged in use to abut part of the vehicle to prevent rotation of the wheel.

The term 'mounting aperture' is used herein to refer to an aperture in a wheel which is used to mount or secure the wheel to a rotatable hub of a vehicle. For instance, as is well known, vehicle wheels are typically mounted to a wheel hub by studs which extend through mounting apertures in a central portion of the wheel, and are secured by wheel nuts which are threaded onto the studs. Alternatively, wheel bolts may extend through the mounting apertures and engage with threaded bores in the wheel hub.

Separately, a wheel may comprise openings as a part of the design of the wheel. For example, openings may be provided by spaces between spokes, or holes formed in the wheel to reduce weight or to provide ventilation. Such openings, which do not act as mounting apertures, generally extend from the first, outer face of the wheel towards the second, inner face of the wheel, and are generally disposed between the mounting apertures and a periphery of the wheel that forms a ground-contacting surface of the wheel (typically the tread of a pneumatic tyre). The term "wheel" in this context includes the tyre along with the steel or alloy rim upon which the wheel is mounted.

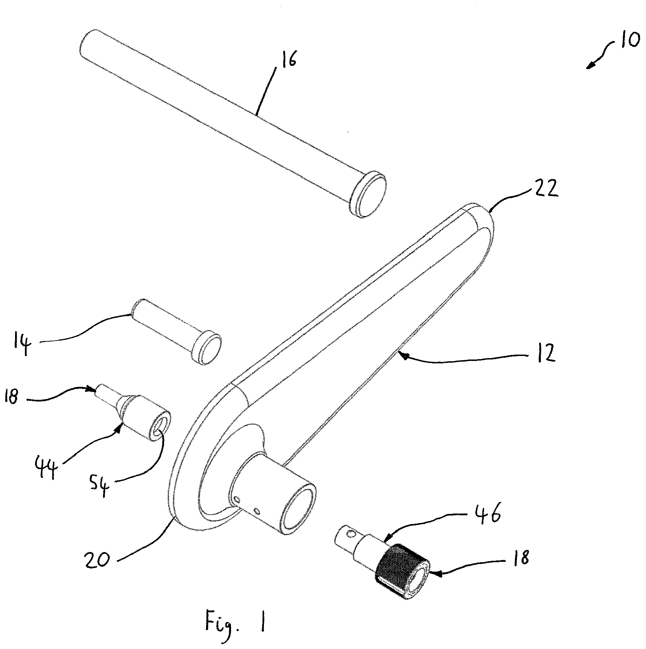

A wheel clamp according to a first embodiment of the invention is shown in Figures 1 to 6.

Referring to Figure 1, the wheel clamp 10 comprises a body or shield 12, a coupling pin 14, an immobilising arm 16, and locking means 18. The locking means 18, coupling pin 14 and immobilising arm 16 are arranged to be secured to the shield 12.

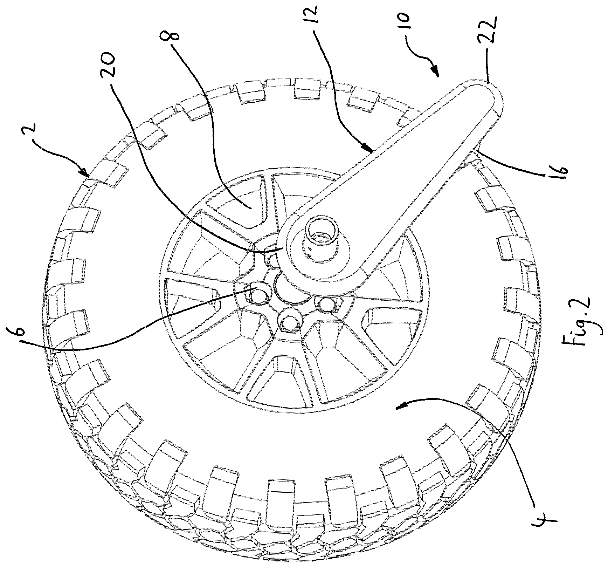

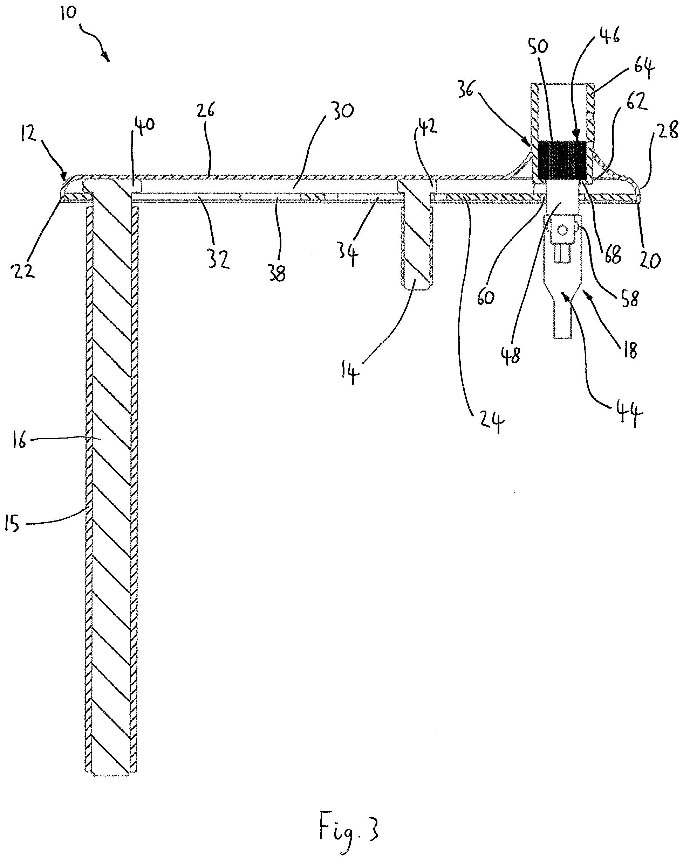

Referring additionally to Figures 2 and 3, the shield 12 is generally elongate and extends between a first end 20 and a second end 22. As can most clearly be seen in Figure 3, the shield 12 comprises a generally hollow structure formed by a base plate 24 and a cover plate 26. The base plate 24 is generally planar and extends along a length of the shield 12. The cover plate 26 is substantially planar and extends over and parallel to the base plate 24. The cover plate 26 includes a skirt 28 that extends from an outer edge of the cover plate 26 to a perimeter of the base plate 24, so as to enclose and prevent access to a hollow interior 30 of the shield.

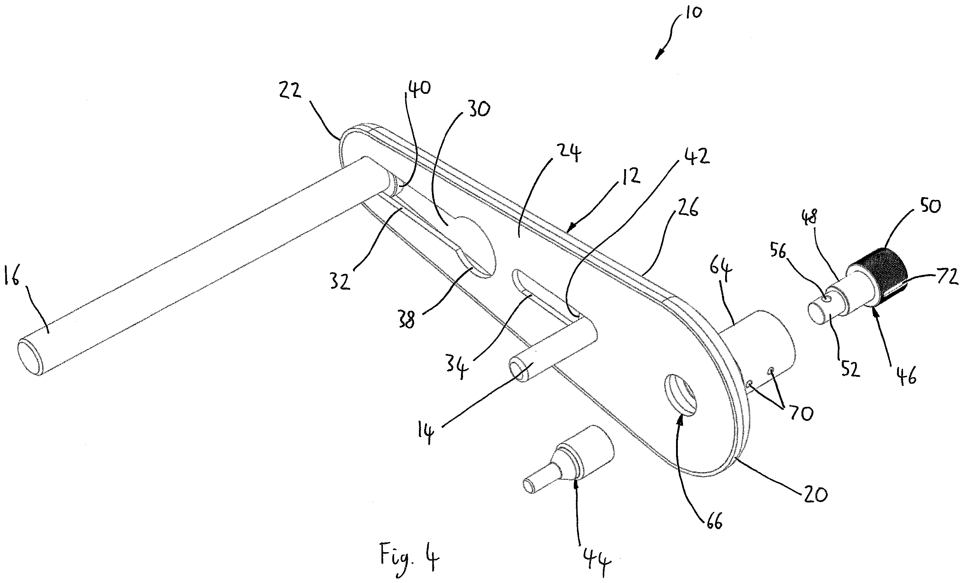

As shown in Figures 3 and 4, the shield 12 comprises an elongate immobilising arm slot 32 for mounting the immobilising arm 16, an elongate coupling pin slot 34 for retaining the coupling pin 14 and a socket 36 for the locking means 18. The immobilising arm slot 32 is disposed adjacent the second end 22 of the shield 12. The socket 36 is disposed adjacent the first end 20 of the shield 12, and the coupling pin slot 34 is disposed in between the immobilising arm slot 32 and the socket 36.

The immobilising arm slot 32 is formed in the base plate 24 and extends partially along the length of the shield 12. The immobilising arm slot 32 connects with an enlarged diameter release aperture 38 disposed at the end of the immobilising arm slot 32 furthest from the second end 22 of the shield 12, such that the immobilising arm slot 32 and the release aperture 38 together define a keyhole shape. The immobilising arm slot 32 is arranged to receive and retain the immobilising arm 16, as described further below.

The immobilising arm 16 is a generally elongate cylindrical shaft or rod that extends substantially perpendicular to the plane of the base plate 24 when mounted to the shield 12. The immobilising arm 16 is provided with an enlarged head comprising an annular end flange 40 with a larger diameter than the remainder of the arm and the width of the immobilising arm slot 32. In this way, the end flange 40 is sized to be retained in the hollow interior 30 of the shield 12. In this embodiment, the immobilising arm 16 carries a protective sheath 15 (shown only in Figure 3) of a foam rubber or similar material.

The release aperture 38 is sized to allow the end flange 40 of the immobilising arm 16 to pass through, allowing the immobilising arm 16 to be engaged with and removed from the shield 12. With this arrangement, the immobilising arm 16 can be removed to make the wheel clamp 10 more compact for storage and transport. It will be appreciated that, if preferred, the release aperture 38 could be omitted, in which case the immobilising arm 16 would be installed during manufacture of the clamp 10 and would not subsequently be removable.

When mounted, the immobilising arm 16 can slide in the immobilising arm slot 32 in a direction towards or away from the second end 22 of the shield 12 to adjust the position of the immobilising arm 16 with respect to the socket 36.

The coupling pin slot 34 is formed in the base plate 24 and extends partially along the length of the shield 12 between, but not connecting with, the immobilising arm slot 32 and the socket 36.

The coupling pin 14 is a generally cylindrical shaft or rod arranged to extend substantially perpendicular to the plane of the shield 12 when mounted to the shield 12. An enlarged head comprising a retaining flange 42 of increased diameter is provided adjacent an end of the coupling pin 14. The retaining flange 42 is held captive in the interior 30 of the shield 12, and the remainder of the coupling pin 14 passes through the coupling pin slot 34 to project from the shield 12. The retaining flange 42 is arranged to slide in the hollow interior 30 such that the coupling pin 14 can slide in the coupling pin slot 34 in a direction towards or away from the second end 22 of the shield 12.

The length of the coupling pin 14 is shorter than the length of the immobilising arm 16 so that the coupling pin 14 does not project as far from the shield 12 as the immobilising arm 16.

A suitable locking means for locking the wheel clamp to the wheel is described in detail in GB 2483109 B, the contents of which are hereby incorporated by reference, and so will described only briefly here.

The locking means 18 includes a first locking member 44 and a second locking member 46. The locking means 18 is arranged to lock the shield 12 to the wheel 2 at the location of a conventional wheel fastener such as a wheel nut or wheel bolt. In particular, the first locking member 44 replaces a conventional wheel fastener and helps to secure the wheel 2 to the vehicle, but also provides engagement means in order for the second locking member 44 to be engaged with and locked to the first locking member 46.

Accordingly, prior to use, a user simply removes an existing wheel nut or wheel bolt and secures the first locking member 44 in its place in a mounting aperture 6 of the wheel 2. Once installed, the first locking member 44 remains in position on the vehicle and acts as a conventional wheel nut or wheel bolt. Therefore, the first locking member 44, along with the other conventional wheel nuts or wheel bolts, secures the wheel 2 to the vehicle. In the illustrated embodiments, the first locking member 44 replaces an existing wheel bolt.

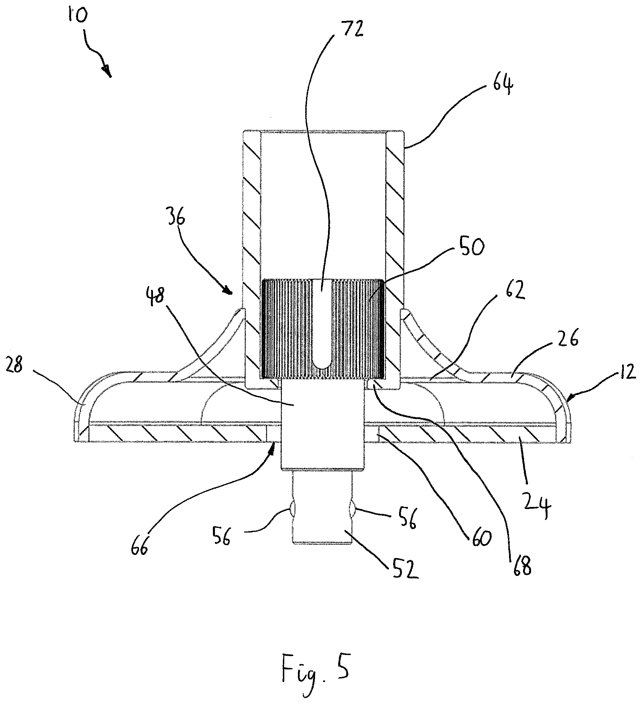

As can be seen most clearly in Figure 5, the second locking member comprises a middle portion 48 which extends between a head 50 and a shaft 52. The first locking member 44 comprises a cylindrical opening 54 into which the shaft 52 of the second locking member 46 can be inserted.

The socket 36 is disposed adjacent the first end 20 of the shield 12 and is arranged in use to cooperate with the locking means 18 in order to lock the shield 12 to the wheel 2. The socket 36 comprises an aperture 60 in the base plate 24 which opens into the hollow interior 30 and is aligned with an opposing opening 62 in the cover plate 26. The socket 36 includes a shroud 64 in the form of a generally cylindrical tube disposed in the opening 62 in the cover plate 26. The shroud 64 extends away from the cover plate 26 in a direction substantially perpendicular to the shield 12. The tubular shroud 64 is aligned with the aperture 60 so as to provide a continuous lock aperture 66 through the shield 12. An internal diameter of the shroud 64 proximate the cover plate 26 is restricted by an internal annular flange 68.

The socket 36 is arranged to receive part of the second locking member 46 such that the first and second locking members 44, 46 can be locked together through the lock aperture 66. The shroud 64 is sized to receive the head 50 of the second locking member 46. The annular flange 68 of the shroud 64 is sized to receive the middle portion 48 of the second locking member 46. As can be seen in Figures 3 and 5, the head 50 of the second locking member 46 has a larger diameter than the middle portion 48, and so cannot fit past the annular flange 68 in the shroud 64. The annular flange 68 therefore provides an abutment surface which contacts the head 50 of the second locking member 46 in use. The shaft 52 of the second locking member 46 extends through the lock aperture 66 and away from the shield 12 such that the shaft 52 is able to engage with the first locking member 44.

As can be seen most clearly in Figure 3 and 5, the shaft 52 houses a plurality of locking elements 56 that are radially movable. In this example, the locking elements 56 are ball bearings. The second locking member 46 includes a key-operated lock mechanism (not shown) that is operable to move the locking elements 56 from an unlocked position to a locked position. In the unlocked position, the locking elements 56 are retracted or retractable so that the shaft 52 can pass into the cylindrical opening 54 of the first locking member 44. In the locked position, the locking elements 56 are held in a radially projecting position to engage with a corresponding retaining groove or recess 58 in the cylindrical opening 54. In this way, the first and second locking elements 44, 46 can be locked together and can be separated only by operating the locking mechanism.

The shroud 64 also includes holes 70 for grub screws (not shown) which are arranged to limit the rotation of the second locking member 46 in the shroud 64. A longitudinal groove 72 on the head 50 of the second locking member 46 is arranged to engage with the grub screws. In use, the shroud 64 protects the second locking member 46 and prevents easy access for tools which may be used to try to break, destroy or remove the second locking member 46 in order to release the wheel clamp 10 from the wheel 2.

Before installation of the clamp 10, a conventional wheel bolt is replaced with the first locking member 44. The first locking member 44 can subsequently remain in place even when the wheel clamp 10 is removed and the vehicle moved to reduce the steps required for subsequent installation of the clamp 10.

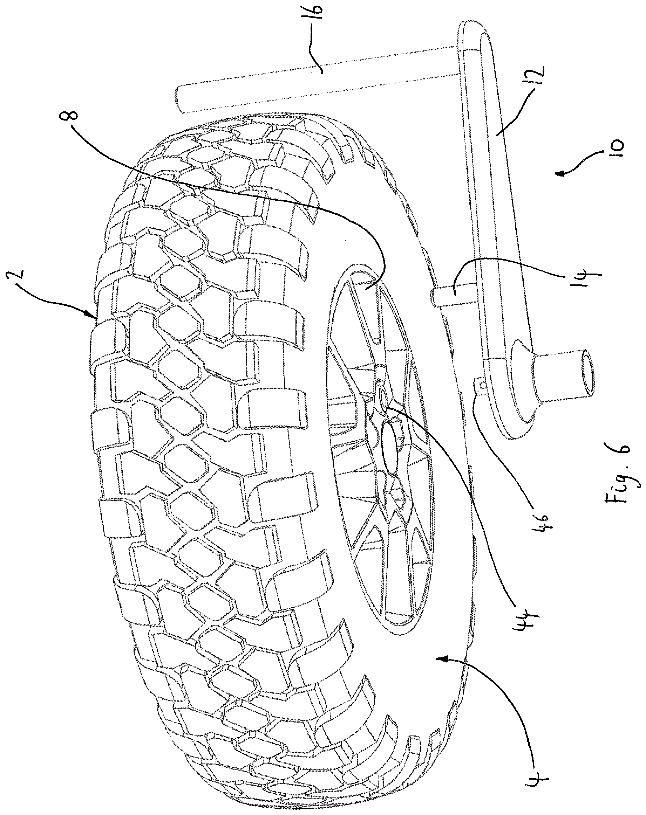

Referring to Figure 6, to attach the wheel clamp 10 to the vehicle, the first end 20 of the shield 12 is positioned adjacent to a central portion of the wheel 2 and the second end 22 is positioned adjacent an outer perimeter of the wheel 2, so that the shield 12 extends generally radially across the face 4 of the wheel 2 between the first end 20 and the second end 22. The wheel clamp 10 is manipulated to approximately align the coupling pin 14 with an opening 8 in the wheel 2, and to approximately align the socket 36 with the first locking member 44. The radial position of the coupling pin 14 may be adjusted to align the pin 14 with a suitable opening 8 by sliding the coupling pin 14 in the coupling pin slot 34.

The wheel clamp 10 is moved towards the wheel 2, and positioned such that the coupling pin 14 extends into the opening 8, and the first locking member 44 aligns with the lock aperture 66. The wheel clamp 10 is secured in place by engaging the second locking member 46 with the socket 36, and locking the second locking member 46 to the first locking member 44. In this way, the wheel clamp 10 is locked to the wheel 2 as shown in Figure 2.

The second end 22 of the shield 12 and the immobilising arm 16 are positioned beyond the edge of the first face of the wheel 2. The immobilising arm 16 projects from the shield 12 and extends past the periphery of the wheel 2 (alongside the surface of the tyre), towards the chassis of the vehicle.

When installed, the wheel clamp 10 acts to prevent the wheel rotating through a full revolution. The coupling pin 14 serves to rotationally couple the wheel clamp 10 to the wheel 2 by abutment with a spoke or other solid part of the wheel 2 at the periphery of the opening 8 into which the coupling pin 14 extends when installed. The immobilising arm 16, in turn, prevents free rotation of the wheel clamp 10 by coming into abutment with a non-rotating part of the vehicle inboard of the wheel 2, such as a chassis member. In this way, rotation of the wheel 2 is blocked.

It will be appreciated that some rotational movement of the wheel 2 may be possible when the wheel clamp 10 is installed. The wheel 2 may be able to rotate through a small angle before the coupling pin 14 comes into abutment with a solid part of the wheel. Then, the wheel clamp 10 and the wheel 2 may rotate together until the immobilising arm 16 comes into contact with a part of the vehicle. However, since the wheel 2 cannot rotate through a full revolution, immobilisation of the vehicle is still achieved. In practice, the amount of rotation possible is relatively small and is preferably less than one quarter turn.

The immobilising arm slot 32 is arranged such that when the wheel clamp 10 is secured to a wheel, the immobilising arm 16 cannot be slid as far as the release aperture 38. The immobilising arm 16 is prevented from sliding to the release aperture 38 by abutment with an outer perimeter surface of the wheel 2. Movement of the immobilising arm 16 radially with respect to the wheel 2 is therefore limited, in this case by abutting a ground-contacting surface (tyre) of the wheel 2. In this way, the immobilising arm 16 cannot be removed from the shield 12 when the wheel clamp 10 is secured to the wheel 2.

The coupling pin 14 is sized so that it does not extend fully through the wheel 2 in use. In this way, when the wheel clamp 10 is secured to the wheel 2, the coupling pin 14 does not extend so far through the opening 8 in the wheel 2 so as to foul other parts of the vehicle in the vicinity of the wheel, such as brake components. The adjustability of the position of the coupling pin 14 and the immobilising arm 16 allows the wheel clamp 10 to be used with different sizes and/or designs of wheels, in which the arrangement of openings may differ.

Conveniently, as can be seen in Figures 2 and 6, the wheel clamp 10 is compact and does not extend fully across the outer face 4 of the wheel 2. Advantageously, the shield 12 is arranged to extend over at least one other mounting aperture 6, in addition to the mounting aperture 6 in which the first locking member 44 is fitted. As can been seen in Figure 2, in this example the shield 12 partially covers two of the remaining wheel bolt heads. In this way, when the wheel clamp 10 is locked to the wheel 2 the shield 12 helps to prevent access to the mounting apertures 6.

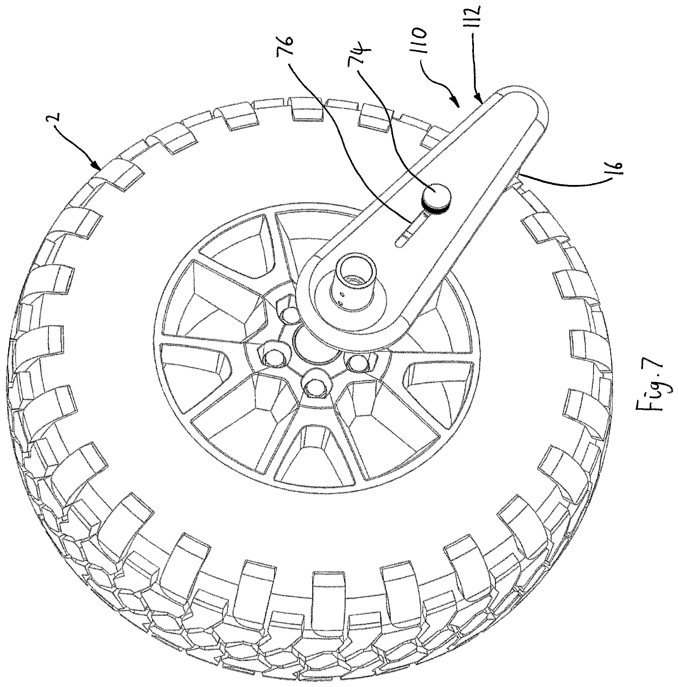

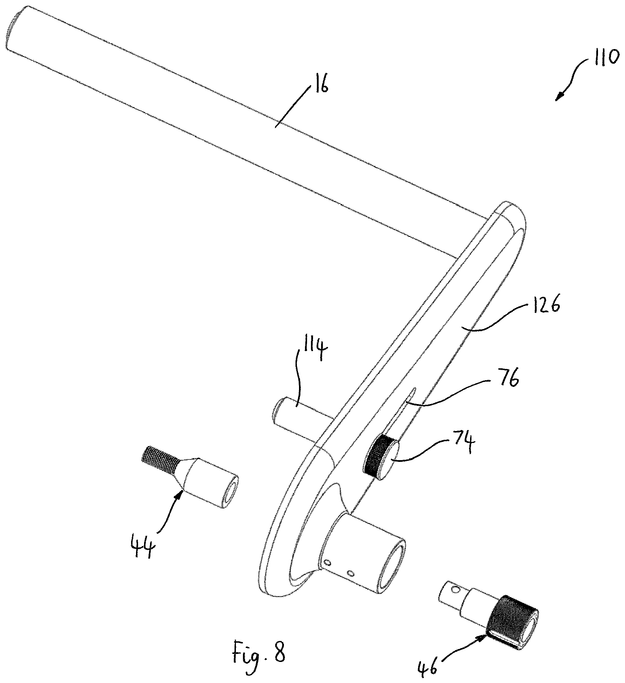

A wheel clamp 110 according to a second embodiment of the invention is shown in Figures 7 to 9. This second embodiment is generally similar to the first embodiment, and only the differences will be described; like reference signs are used for corresponding features in each embodiment.

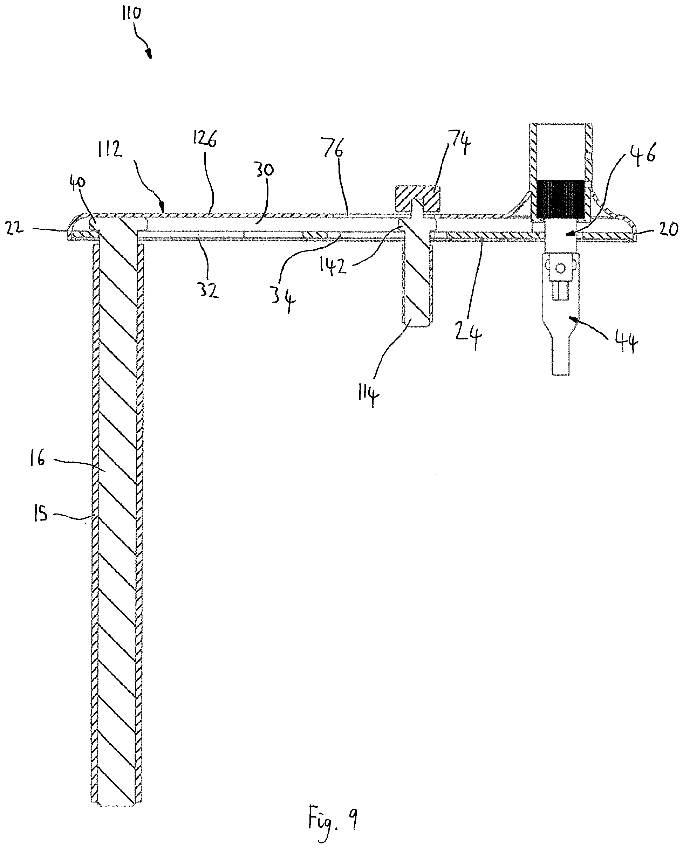

Referring to Figure 9, in this second embodiment, the coupling pin 114 includes a grip portion 74 that is attached to the retaining flange 142, and a second coupling pin slot 76 is formed in the cover 126 of the shield 112 and is aligned with the coupling pin slot 134 in the base plate 24 of the shield 112.

The grip portion 74 of the coupling pin 114 extends out of the second coupling pin slot 76 on an outer side of the cover 126, so that the grip portion 74 is readily accessible by the user when installing the clamp 110. In this way, in use, the radial position of the coupling pin 114 can be adjusted from the outer side of the wheel clamp 110, to aid alignment of the coupling pin 114 with a wheel opening 6 as the wheel clamp 110 is positioned against the wheel 2.

In a variant of this second embodiment, the grip portion is rotatable or otherwise movable with respect to the remainder of the coupling pin, and is operable to clamp the coupling pin in a fixed position in the coupling pin slot so that subsequent installations of the clamp to the same vehicle are simplified. In one example, the grip portion and the remainder of the coupling pin are engaged with a screw thread, so that the grip portion can be turned to clamp the cover plate between the grip portion and the retaining flange of the coupling pin at the edge of the second coupling pin slot.

It will be appreciated that, in other embodiments, all or part of the shield could comprise a solid body, rather than a base plate and a cover. The immobilising arm and/or coupling pin could be mounted in a fixed position on the shield, or could be arranged to screw into or otherwise engage with a respective one of a plurality of mounting apertures to allow the arm or pin to be moved between several discrete positions. Various other ways of mounting the immobilising arm and or coupling pin to the shield in a fixed, sliding or otherwise repositionable arrangement can also be envisaged.

The present invention may preferably be for use and/or mounted to a motorhome, a trailer, a caravan, a camper van, a commercial van and/or certain cars which require the particular arrangement and/or assembly of a lock as provided by the present invention.

Further modifications and variations not explicitly described above may also be contemplated without departing from the scope of the invention as defined in the appended claims.

## Claims

1. A wheel clamp (10) for immobilising a vehicle, the vehicle comprising a wheel (2) having a first face, a second face and a periphery forming a ground-contacting surface of the wheel (2), the wheel (2) comprising a plurality of mounting apertures (6) for receiving wheel fasteners for attaching the wheel (2) to a rotatable hub of the vehicle and a plurality of openings (8) extending from the first face towards the second face, the openings (8) being disposed between the mounting apertures (6) and the periphery, the wheel clamp (10) comprising:
a body (12) arranged to be positioned, in use, adjacent to the first face of the wheel (2);
locking means (18) to releasably secure the wheel clamp (10) to the vehicle, the locking means (18) comprising a first locking member (44) arranged to extend through a mounting aperture (6) of the wheel (2) to attach the wheel (2) to the hub and a second locking member (46) operable to releasably attach the body (12) to the first locking member (44);
a coupling pin (14) extending from the body (12) and arranged to extend into one of the openings (8) of the wheel (2) so as to couple rotationally the wheel clamp (10) to the wheel (2); and
an immobilising arm (16) extending from the body (12) and arranged to extend adjacent to the periphery of the wheel (2) and beyond the second face of the wheel (2) such that, in use, rotation of the wheel (2) is blocked by contact between the immobilising arm (16) and a part of the vehicle.

2. A wheel clamp (10) according to Claim 1, wherein the immobilising arm (16) extends further from the body (12) than the coupling pin (14).

3. A wheel clamp (10) according to Claim 1 or Claim 2, wherein the position of the coupling pin (14) relative to the locking means (18) is adjustable.

4. A wheel clamp (10) according to Claim 3, wherein the coupling pin (14) is slidably mounted with respect to the body (12) such that the position of the coupling pin (14) relative to the locking means (18) can be changed by sliding of the coupling pin (14).

5. A wheel clamp (10) according to Claim 4, wherein the coupling pin (14) comprises a shaft and an enlarged head and the body (12) comprises an elongate coupling pin slot (34) for receiving the coupling pin shaft, the coupling pin slot (34) being sized such that the coupling pin head cannot pass through the coupling pin slot (34).

6. A wheel clamp (10) according to any preceding claim, wherein the position of the immobilising arm (16) relative to the locking means (18) is adjustable.

7. A wheel clamp (10) according to Claim 6, wherein the immobilising arm (16) is slidably mounted with respect to the body (12) such that the position of the immobilising arm (16) relative to the locking means (18) can be changed by sliding of the immobilising arm (16).

8. A wheel clamp (10) according to Claim 7, wherein the immobilising arm (16) comprises a shaft and an enlarged head and the body (12) comprises an elongate immobilising arm slot (32) for receiving the immobilising arm shaft, the immobilising arm slot (32) being sized such that the immobilising arm head cannot pass through the immobilising arm slot (32), wherein the immobilising arm slot (32) connects with a release aperture (38) through which the immobilising arm head can pass to allow removal of the immobilising arm (16) from the body (12) and, wherein the release aperture (38) is disposed between the immobilising arm slot (34) and the locking means (18) and is positioned such that, when the wheel clamp (10) is secured to the vehicle, movement of the immobilising arm (16) to the release aperture (38) is blocked by the periphery of the wheel (2).

9. A wheel clamp (10) according to Claim 8, wherein the body (12) comprises a base plate (24) from which the coupling pin (14) and the immobilising arm (16) extend, and a cover (26) that prevents access to the immobilising arm (16) in use, wherein the immobilising arm slot (32) is disposed in the base plate (24), wherein the coupling pin slot (34) is disposed in the base plate (24) and wherein the cover (26) prevents access to the coupling pin (14) in use.

10. A wheel clamp (10) according to any preceding claim, in which the body (12) at least partially conceals at least one further mounting aperture (6) of the wheel (2) when the wheel clamp (10) is secured to the vehicle.

11. A wheel clamp (10) according to any preceding claim, in which the first locking member (44) comprises a replacement wheel fastener.

12. A wheel clamp (10) according to any preceding claim, wherein the body (12) comprises a socket (36) for receiving the second locking member (46).

13. A wheel clamp (10) according to Claim 12, wherein the socket (46) comprises an aperture (60) for receiving a shaft of the second locking member (46).

14. A method of immobilising a vehicle comprising:
positioning a wheel clamp (10) according to any preceding claim against a first face of a wheel (2), such that a coupling pin (14) of the wheel clamp (10) extends into an opening (8) of the wheel (2) to rotationally couple the wheel clamp (10) to the wheel (2), and such that an immobilising arm (16) of the wheel clamp (10) extends adjacent to a periphery of the wheel (2) and beyond a second face of the wheel (2) to contact a part of the vehicle upon attempted rotation of the wheel (2); and
securing the wheel clamp (10) to a hub of the vehicle to which the wheel (2) is mounted by way of a locking means (18) that extends through a mounting aperture (6) of the wheel (2).

15. A method according to Claim 14, comprising:
installing a first locking member (44) of the locking means (18) in place of a wheel fastener in a mounting aperture (6)) of the wheel (2) to attach the wheel (2) to the hub;
and wherein securing the wheel clamp (10) to the hub comprises engaging a second locking member (46) with a body (12) of the wheel clamp (10) and the first locking member (44).

## Patentansprüche

1. Radkralle (10) zur Immobilisierung eines Fahrzeugs, wobei das Fahrzeug ein Rad (2) mit einer ersten Seite und einer zweiten Seite sowie einem Rand, der die Bodenkontaktfläche des Rades (2) bildet, wobei das Rad (2) eine Mehrzahl Montageöffnungen (6) zur Aufnahme von Radverbindungselementen zur Anbringung des Rades (2) an einer drehbaren Nabe des Fahrzeugs sowie eine Mehrzahl Öffnungen (8) umfasst, welche sich von der ersten Seite in Richtung der zweiten Seite erstrecken, wobei die Öffnungen (8) zwischen den Montageöffnungen (6) und dem Rand angeordnet sind, wobei die Radkralle (10) folgendes umfasst:
einen Grundkörper (12), der so angeordnet ist, dass er im Gebrauchszustand angrenzend an die erste Seite des Rades (2) positioniert werden kann;
ein Verriegelungsmittel (18), um die Radkralle (10) lösbar am Fahrzeug zu befestigen, wobei das Verriegelungsmittel (18) ein erstes Verriegelungselement (44), welches so angeordnet ist,
dass es sich durch eine Montageöffnung (6) des Rades (2) hindurch erstreckt, um das Rad (2) an der Nabe anzubringen, und ein zweites Verriegelungselement (46) umfasst, welches betätigbar ist, um den Grundkörper (12) am ersten Verriegelungselement (44) lösbar zu befestigen;
einen Kopplungsstift (14), der sich von dem Grundkörper (12) ausgehend erstreckt und so angeordnet ist, dass er sich in eine der Öffnungen (8) des Rades (2) erstreckt, um die Radkralle (10) drehbar mit dem Rad (2) zu koppeln; und
einen Immobilisierungsschenkel (16), der sich vom Grundkörper (12) ausgehend erstreckt und so angeordnet ist, dass er sich angrenzend an den Rand des Rades (2) und über die zweite Seite des Rades (2) hinaus derart erstreckt, dass im Gebrauchszustand eine Drehung des Rades (2) durch die Berührung zwischen dem Immobilisierungsschenkel (16) und einem Teil des Fahrzeugs blockiert wird.

2. Radkralle (10) nach Anspruch 1, bei welcher der Immobilisierungsschenkel (16) sich weiter von den Grundkörper (12) aus erstreckt als der Kopplungsstift (14).

3. Radkralle (10) nach Anspruch 1 oder 2, bei welcher die Position des Kopplungsstifts (14) relativ zum Verriegelungsmittel (18) einstellbar ist.

4. Radkralle (10) nach Anspruch 3, bei welcher der Kopplungsstift (14) hinsichtlich des Grundkörpers (12) derart verschieblich montiert ist, dass die Position des Kopplungsstifts (14) relativ zum Verriegelungsmittel (18) durch Verschieben des Kopplungsstifts (14) verändert werden kann.

5. Radkralle (10) nach Anspruch 4, bei welcher der Kopplungsstift (14) einen Schaft und einen vergrößerten Kopf umfasst und der Grundkörper (12) einen länglichen Schlitz (34) für den Kopplungsstift zur Aufnahme des Schaftes des Kopplungsstifts umfasst, wobei der Schlitz (34) für den Kopplungsstift derart bemessen ist, dass der Kopf des Kopplungsstifts nicht durch den Schlitz (34) für den Kopplungsstift hindurchtreten kann.

6. Radkralle (10) nach einem der vorigen Ansprüche, bei welcher die Position des Immobilisierungsschenkels (16) relativ zum Verriegelungsmittel (18) einstellbar ist.

7. Radkralle (10) nach Anspruch 6,
bei welcher der Immobilisierungsschenkel (16) hinsichtlich des Grundkörpers derart verschieblich montiert ist, dass die Position des Immobilisierungsschenkels (16) relativ zum Verriegelungsmittel (18) durch Verschieben des Immobilisierungsschenkels (16) verändert werden kann.

8. Radkralle (10) nach Anspruch 7,
bei welcher der Immobilisierungsschenkel (16) einen Schaft und einen vergrößerten Kopf umfasst und der Grundkörper (12) einen länglichen Schlitz (32) für den Immobilisierungsschenkel zur Aufnahme des Immobilisierungsschenkels umfasst, wobei der Schlitz (32) für den Immobilisierungsschenkel derart bemessen ist, dass der Kopf des Immobilisierungsschenkels nicht durch den Schlitz (32) für den Immobilisierungsschenkel durchtreten kann, wobei der Schlitz (32) für den Immobilisierungsschenkel mit einer Löseöffnung (38) verbunden werden kann, durch welche der Kopf des Immobilisierungsschenkels hindurch treten kann, um zu ermöglichen, dass der Immobilisierungsschenkel (16) von dem Grundkörper (12) entfernt werden kann, und wobei die Löseöffnung (38) zwischen dem Schlitz (34) für den Immobilisierungsschenkel und dem Verriegelungsmittel (18) angeordnet und so positioniert ist, dass wenn die Radkralle (10) an dem Fahrzeug befestigt wird, die Bewegung des Immobilisierungsschenkels (16) zur Löseöffnung (38) durch den Rand des Rades (2) blockiert wird.

9. Radkralle (10) nach Anspruch 8,
bei welcher der Grundkörper (12) eine Grundplatte (24), von welcher aus sich der Kopplungsstift (14) und der Immobilisierungsschenkel (16) erstrecken, sowie eine Abdeckung (26) umfasst, die den Zugang zu dem Immobilisierungsschenkel (16) im Gebrauchszustand verhindert, wobei der Schlitz (32) für den Immobilisierungsschenkel in der Grundplatte (24) angeordnet ist, wobei der Schlitz (34) für den Kopplungsstift in der Grundplatte (24) angeordnet ist und wobei die Abdeckung (26) einen Zugriff auf den Kopplungsstift (14) im Gebrauchszustand verhindert.

10. Radkralle (10) nach einem der vorigen Ansprüche, bei welcher der Grundkörper (12) wenigstens teilweise wenigstens eine weitere Montageöffnung (6) des Rades (2) verdeckt, wenn die Radkralle (10) an dem Fahrzeug befestigt ist.

11. Radkralle (10) nach einem der vorigen Ansprüche, bei welcher das erste Verriegelungselement (44) ein Befestigungselement für ein Ersatzrad umfasst.

12. Radkralle (10) nach einem der vorigen Ansprüche, bei welcher der Grundkörper (12) einen Sockel (36) zur Aufnahme des zweiten Verriegelungselements (46) umfasst.

13. Radkralle (10) nach Anspruch 12,
bei welcher der Sockel (46) eine Öffnung (60) zur Aufnahme eines Schaftes des zweiten Verriegelungselements (46) umfasst.

14. Verfahren zum Immobilisieren eines Fahrzeugs, umfassend:
Positionieren einer Radkralle (10) nach einem der vorigen Ansprüche gegen eine erste Seite eines Rades (2), derart,
dass ein Kopplungsstift (14) der Radkralle (10) sich in die Öffnung (8) des Rades (2) erstreckt, um die Radkralle (10) drehbar mit dem Rad (2) zu koppeln, und
derart, dass ein Immobilisierungsschenkel (16) der Radkralle (10) sich angrenzend an einen Rand des Rades (2) und über eine zweite Seite des Rades (2) hinaus erstreckt, um einen Teil des Fahrzeugs bei einer versuchten Drehung des Rades (2) zu berühren; und wobei die Radkralle (10) an der Nabe eines Fahrzeugs befestigt wird, an welcher das Rad (2) befestigt ist,
mittels eines Verriegelungsmittels (18), welches sich durch eine Montageöffnung (10) des Rades (2) erstreckt.

15. Verfahren nach Anspruch 14, umfassend:
Installieren eines ersten Verriegelungselements (44) des Verriegelungsmittels (18) anstelle eines Radverbindungselements in einer Montageöffnung (6) des Rades (2), um das Rad (2) an der Nabe zu befestigen;
und wobei das Befestigen der Radkralle (10) an der Nabe umfasst, dass ein zweites Verriegelungselement (46) mit dem Grundkörper (12) der Radkralle (10) und dem ersten Verriegelungselement (44) in Eingriff gebracht wird.

## Revendications

1. - Sabot de Denver (10) pour immobiliser un véhicule, le véhicule comprenant une roue (2) ayant une première face, une seconde face et une périphérie formant une surface de contact de sol de la roue (2), la roue (2) comprenant une pluralité d'ouvertures de montage (6) destinées à recevoir des organes de fixation de roue pour fixer la roue (2) à un moyeu rotatif du véhicule et une pluralité d'ouvertures (8) s'étendant à partir de la première face vers la seconde face, les ouvertures (8) étant disposées entre les ouvertures de montage (6) et la périphérie, le sabot de Denver (10) comprenant :
un corps (12) agencé pour être positionné, en utilisation, de manière adjacente à la première face de la roue (2) ;
un moyen de verrouillage (18) pour fixer de manière libérable le sabot de Denver (10) au véhicule, le moyen de verrouillage (18) comprenant un premier élément de verrouillage (44) agencé pour s'étendre à travers une ouverture de montage (6) de la roue (2) pour fixer la roue (2) au moyeu et un second élément de verrouillage (46) actionnable pour fixer de manière libérable le corps (12) au premier élément de verrouillage (44) ;
une broche d'accouplement (14) s'étendant à partir du corps (12) et agencée pour s'étendre dans l'une des ouvertures (8) de la roue (2) de façon à accoupler en rotation le sabot de Denver (10) à la roue (2) ; et
un bras d'immobilisation (16) s'étendant à partir du corps (12) et agencé pour s'étendre de manière adjacente à la périphérie de la roue (2) et au-delà de la seconde face de la roue (2) de telle sorte qu'en utilisation une rotation de la roue (2) est bloquée par contact entre le bras d'immobilisation (16) et une partie du véhicule.

2. - Sabot de Denver (10) selon la revendication 1, dans lequel le bras d'immobilisation (16) s'étend plus loin du corps (12) que la broche d'accouplement (14).

3. - Sabot de Denver (10) selon la revendication 1 ou la revendication 2, dans lequel la position de la broche d'accouplement (14) par rapport au moyen de verrouillage (18) est réglable.

4. - Sabot de Denver (10) selon la revendication 3, dans lequel la broche d'accouplement (14) est montée de manière coulissante par rapport au corps (12) de telle sorte que la position de la broche d'accouplement (14) par rapport au moyen de verrouillage (18) peut être changée par coulissement de la broche d'accouplement (14).

5. - Sabot de Denver (10) selon la revendication 4, dans lequel la broche d'accouplement (14) comprend un arbre et une tête élargie et le corps (12) comprend une fente pour broche d'accouplement allongée (34) pour recevoir l'arbre de broche d'accouplement, la fente pour broche d'accouplement (34) étant dimensionnée de telle sorte que la tête de broche d'accouplement ne peut pas passer à travers la fente pour broche d'accouplement (34).

6. - Sabot de Denver (10) selon l'une quelconque des revendications précédentes, dans lequel la position du bras d'immobilisation (16) par rapport au moyen de verrouillage (18) est réglable.

7. - Sabot de Denver (10) selon la revendication 6, dans lequel le bras d'immobilisation (16) est monté de manière coulissante par rapport au corps (12) de telle sorte que la position du bras d'immobilisation (16) par rapport au moyen de verrouillage (18) peut être changée par coulissement du bras d'immobilisation (16).

8. - Sabot de Denver (10) selon la revendication 7, dans lequel le bras d'immobilisation (16) comprend un arbre et une tête élargie et le corps (12) comprend une fente pour bras d'immobilisation allongée (32) pour recevoir l'arbre de bras d'immobilisation, la fente pour bras d'immobilisation (32) étant dimensionnée de telle sorte que la tête de bras d'immobilisation ne peut pas passer à travers la fente pour bras d'immobilisation (32), la fente pour bras d'immobilisation (32) étant reliée à une ouverture de libération (38) à travers laquelle la tête de bras d'immobilisation peut passer pour permettre un retrait du bras d'immobilisation (16) du corps (12), et l'ouverture de libération (38) étant ménagée entre la fente pour bras d'immobilisation (34) et le moyen de verrouillage (18) et étant positionnée de telle sorte que, lorsque le sabot de Denver (10) est fixé au véhicule, un mouvement du bras d'immobilisation (16) vers l'ouverture de libération (38) est bloqué par la périphérie de la roue (2).

9. - Sabot de Denver (10) selon la revendication 8, dans lequel le corps (12) comprend une plaque de base (24) à partir de laquelle la broche d'accouplement (14) et le bras d'immobilisation (16) s'étendent, et un capot (26) qui empêche l'accès au bras d'immobilisation (16) en utilisation, la fente pour bras d'immobilisation (32) étant ménagée dans la plaque de base (24), la fente pour broche d'accouplement (34) étant ménagée dans la plaque de base (24) et le capot (26) empêchant l'accès à la broche d'accouplement (14) en utilisation.

10. - Sabot de Denver (10) selon l'une quelconque des revendications précédentes, dans lequel le corps (12) dissimule au moins partiellement au moins une autre ouverture de montage (6) de la roue (2) lorsque le sabot de Denver (10) est fixé au véhicule.

11. - Sabot de Denver (10) selon l'une quelconque des revendications précédentes, dans lequel le premier élément de verrouillage (44) comprend un organe de fixation de roue de remplacement.

12. - Sabot de Denver (10) selon l'une quelconque des revendications précédentes, dans lequel le corps (12) comprend une douille (36) destinée à recevoir le second élément de verrouillage (46).

13. - Sabot de Denver (10) selon la revendication 12, dans lequel la douille (46) comprend une ouverture (60) destinée à recevoir un arbre du second élément de verrouillage (46).

14. - Procédé d'immobilisation d'un véhicule comprenant :
positionner un sabot de Denver (10) selon l'une quelconque des revendications précédentes contre une première face d'une roue (2), de telle sorte qu'une broche d'accouplement (14) du sabot de Denver (10) s'étend dans une ouverture (8) de la roue (2) pour accoupler en rotation le sabot de Denver (10) à la roue (2), et de telle sorte qu'un bras d'immobilisation (16) du sabot de Denver (10) s'étend de manière adjacente à une périphérie de la roue (2) et au-delà d'une seconde face de la roue (2) pour entrer en contact avec une partie du véhicule lors d'une tentative de rotation de la roue (2) ; et
fixer le sabot de Denver (10) à un moyeu du véhicule sur lequel la roue (2) est montée à l'aide d'un moyen de verrouillage (18) qui s'étend à travers une ouverture de montage (6) de la roue (2).

15. - Procédé selon la revendication 14, comprenant :
installer un premier élément de verrouillage (44) du moyen de verrouillage (18) à la place d'un organe de fixation de roue dans une ouverture de montage (6) de la roue (2) pour fixer la roue (2) au moyeu ;
et fixer le sabot de Denver (10) au moyeu comprenant engager un second élément de verrouillage (46) avec un corps (12) du sabot de Denver (10) et le premier élément de verrouillage (44).
